# EUROPEAN PATENT SPECIFICATION

(11) **EP 2 345 318 B1**
(45) Date of publication and mention of the grant of the patent: **12.04.2017**
(21) Application number: 11150859.4
(22) Date of filing: 13.01.2011
(51) Int. Cl.: A01B 15/02

(54) **Winged tine**
Flügelzinke
Dent ailée

(30) Priority: 13.01.2010 GB 201000546
(43) Date of publication of application: 20.07.2011
(73) Proprietor: Wright Resolutions Ltd, Boston Lincolnshire PE21 7EX (GB)
(72) Inventor: Phillip, Wright, Boston, Lincolnshire PE21 7EX (GB)
(74) Representative: Croston, David

(56) References cited:
- GB-A- 2 143 414
- RU-C1- 2 214 703
- US-A- 5 215 150

## Description

The present invention relates to a soil loosening tine for use in soil cultivation.

Soil becomes compacted due to traffic and cultivation whilst establishment, maintenance and harvesting of crops takes place. In order to overcome such compaction, soil is loosened by soil loosening tines attached to subsoilers or other field cultivators.

It is known to increase the loosening effect of such tines by increasing the tine effectiveness with the addition of tine wings, allowing a wider soil profile to be lifted. However, there are drawbacks to the tine wings currently available. These include smearing of the lifted soil as a result of cutting and lifting of the entire soil profile, excessive power requirements needed to drive soil over particularly wide wings, the creation of large lumps of earth and the lifting of large lumps of earth resulting in an uneven soil surface. Additionally, the wings are often designed to avoid the throwing of cut soil inwards against the tine leg, which can lead to soil being thrown outwards and creating a requirement for subsequent soil levelling.

British Patent Application No.2143414 shows a ground working implement with a ground working member trailed by an angled deflector plate.

It is an object of the invention to provide an improved soil loosening tine.

According to the present invention there is provided a soil loosening tine having a body, a soil contacting tip and at least one wing extending transversely relative to the tip, wherein the at least one wing comprises a carrier extending from the tine and at least two wing slats, spaced apart from one another on the carrier. The soil loosening tine may further comprise at least one wing on either side of the tine, each wing slat comprising a trailing edge, an inner side and an outer side, characterised in that the trailing portion of at least one of the wing slats is twisted and angled upwards in relation to a plane defined by the remainder of the wing slat, so that the outer rear corner of the trailing portion of the angled wing slat is higher than the inner rear corner thereof. The at least two wing slats may each comprise a leading edge, and the leading edge of at least one of the wing slats may comprise a cutting edge.

The leading edges of the at least two wing slats may be angled in relation to the sides and the trailing portion of at least one of the wing slats may be angled in relation to a plane defined by the remainder of the wing slat. The at least two wing slats are preferably detachably mounted on the carrier and may be of heat treated material and/or coated with a wear resistant substance.

The leading points of the at least two wing slats may be aligned in relation to the direction of travel, or they may be staggered in relation to the direction of travel. The leading edge of the inner slat may define a line and the leading edge of the one or more outer slats may be a continuation of that line.

The soil loosening tine may further comprise a pointed leading tip and/or a wear shin having a narrow leading edge.

A preferred embodiment of the invention will now be described with reference to the accompanying drawings in which:
Figure 1 shows a perspective view of a winged soil loosening tine according to a preferred embodiment of the present invention;
Figure 2 shows a cross-sectional view of the winged tine according to the embodiment of figure 1;
Figure 3 shows a top view of the winged tine according to the embodiment of figure 1; and
Figure 4 shows a front view of the winged tine according to the embodiment of figure 1.

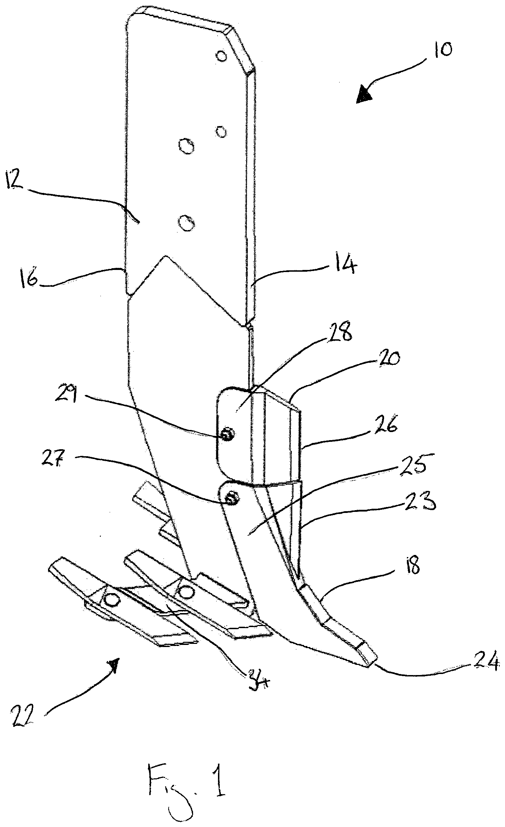

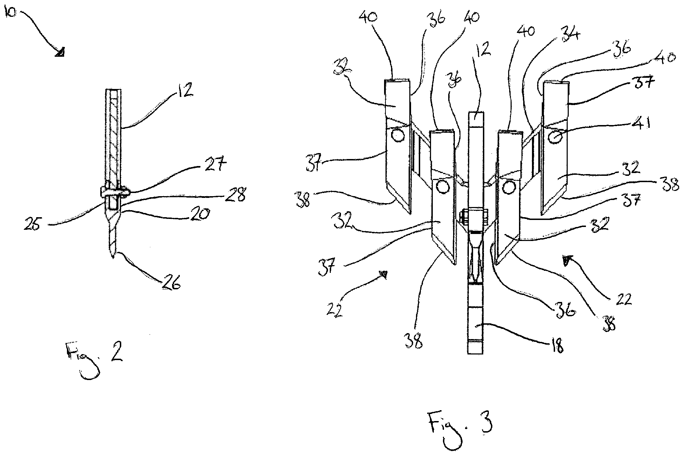

With reference to figures 1 and 2, the winged tine 10 comprises a vertical tine 12 having a leading edge 14 and a trailing edge 16, a leading tip 18, a wear shin 20 and two wings 22. The leading tip 18 comprises a chamfered leading edge 23, a chamfered leading point 24 and two parallel plates 25 protruding rearwards from the main body, each plate 25 having an aperture (not shown). The plates 25 fit either side of the leading edge 14 and are held in place by a leading tip fastener 27, which passes through an aperture (not shown) in the tine 12, such that the leading tip 18 is positioned at the foot of the tine 12.

The wear shin 20 comprises a chamfered leading edge 26 and two parallel plates 28 protruding rearwards from the main body, each plate having an aperture (not shown). The plates 28 fit either side of the leading edge 14, and are held in place above the leading tip 18 by a wear shin fastener 29 which passes through the apertures and a corresponding aperture (not shown) in the tine 12.

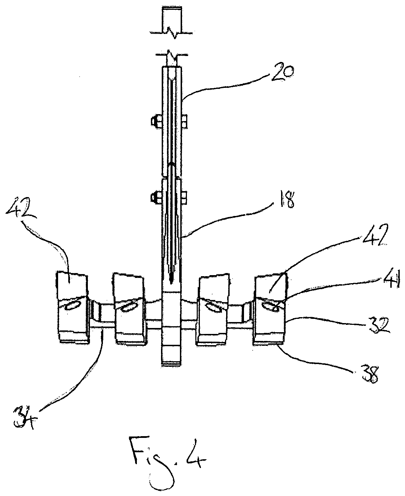

With reference now to Figures 3 and 4, each wing 22 comprises two slats 32 mounted on a carrier 34. Each carrier 34 is welded to the tine 12 so as to form a swept 'V' shape in plan with the leading edge 14 of the tine as its apex and the carriers 34 extending rearwards and upwards. Each slat 32 comprises an inner side 36 proximate the tine 12 and an outer side 37 distal the tine, a leading edge 38, a rear edge 40 and an aperture (not shown). The leading edge 38 is angled in relation to the sides 36, 37, and is chamfered in order to form a cutting edge. The trailing portion 42 of each slat 32 is twisted and angled upwards so that the outer rear corner of each slat 32 is higher than the inner rear corner thereof. The slats 32 are attached to the carrier 34 by a fastener 41, such as a nut and bolt, which passes through a corresponding carrier aperture (not shown), and are staggered so that the leading edges 38 form a 'V' parallel to the carriers 34.

In use, the spaced slats 32 allow a reduced draft requirement for the same soil profile as that of a solid wing. The shape and configuration of the slats imparts upward and twisting motions to soil above them, resulting in improved breaking and rearrangement of the soil. In addition the twisted shape provides a reduced surface area contact to any large clods passing over the slats; this action further encourages breakdown of such clods by increased loadings acting upon their surfaces. The twisted shape of the slats 32 allows soil to flow inwards in the wake of the tine 12. The chamfered front edges of the leading tip and wear shin cut any large clods as they are raised, ensuring that clods are not pushed to one side of the tine and left unbroken.

In alternative embodiments of the invention, the carriers 34 may form a straight line rather than a "V" shape. The slats 32 may be arranged in a line parallel to the straight carriers 34. The leading edges of the slats, leading tip and wear shin may be heat treated or coated with wear resistant surface plates or coatings in order to improve durability.

## Claims

1. A soil loosening tine (10) having a body (12), a soil contacting tip (18) and at least one wing (22) extending transversely relative to the tip, wherein the at least one wing comprises a carrier (34) extending from the tine and at least two wing slats (32), spaced apart from one another on the carrier, each wing slat comprising a trailing edge (42), an inner side and an outer side, **characterised in that** the trailing portion of at least one of the wing slats (32) is twisted and angled upwards in relation to a plane defined by the remainder of the wing slat, so that the outer rear corner of the trailing portion of the angled wing slat is higher than the inner rear corner thereof.

2. A soil loosening tine according to claim 1 wherein the soil loosening tine (10) further comprises at least one wing (22) on either side of the tine.

3. A soil loosening tine according to claim 1 wherein the leading edge (38) of at least one of the wing slats (32) comprises a cutting edge.

4. A soil loosening tine according to claim 1 or claim 3 wherein the leading edges (38) of the at least two wing slats (22) are angled in relation to the sides.

5. A soil loosening tine according to any preceding claim wherein the at least two wing slats (32) are detachably mounted on the carrier (34).

6. A soil loosening tine according to any preceding claim wherein the at least two wing slats are of heat treated material.

7. A soil loosening tine according to any preceding claim wherein the at least two wing slats are coated with a wear resistant substance.

8. A soil loosening tine according to any preceding claim wherein the leading points of the at least two wing slats are aligned in relation to the direction of travel.

9. A soil loosening tine according to any of claims 1 to 7 wherein the leading points of the at least two wing slats are staggered in relation to the direction of travel.

10. A soil loosening tine according to claim 4 wherein the leading edge of the inner slat defines a line and the leading edge of the one or more outer slats is a continuation of that line.

11. A soil loosening tine according to any preceding claim further comprising a pointed leading tip with a narrow leading edge.

12. A soil loosening tine according to any preceding claim further comprising a wear shin (20) having a narrow leading edge.

13. A soil loosening tine according to any preceding claim in which the trailing portion of each wing slat (32) is twisted and angled upwards in relation to a plane defined by the remainder of the respective wing slat, so that the outer rear corner of the trailing portion of the respective angled wing slat is higher than the inner rear corner thereof.

## Patentansprüche

1. Bodenlockerungszinke (10), die einen Körper (12), eine Bodenkontaktierungsspitze (18) und wenigstens einen sich relativ zu der Spitze quer erstreckenden Flügel (22) aufweist, wobei der wenigstens eine Flügel einen sich von der Zinke erstreckenden Träger (34) und wenigstens zwei Flügellamellen (32) umfasst, die voneinander beabstandet an dem Träger angeordnet sind, wobei jede Flügellamelle eine nacheilende Kante (42), eine Innenseite und eine Außenseite umfasst, **dadurch gekennzeichnet, dass** der nacheilende Abschnitt der wenigstens einen der Flügellamellen (32) verdreht und in Relation zu einer von dem Rest der Flügellamelle definierten Ebene nach oben abgewinkelt ist, so dass die äußere hintere Ecke des nacheilenden Abschnitts der abgewinkelten Flügellamelle höher als die innere hintere Ecke von diesem ist.

2. Bodenlockerungszinke nach Anspruch 1, wobei die Bodenlockerungszinke (10) ferner wenigstens einen Flügel (22) auf jeder der beiden Seiten der Zinke umfasst.

3. Bodenlockerungszinke nach Anspruch 1, wobei die voreilende Kante (38) von wenigstens einer der Flügellamellen (32) eine Schneidkante umfasst.

4. Bodenlockerungszinke nach Anspruch 1 oder Anspruch 3, wobei die voreilenden Kanten (38) der wenigstens zwei Flügellamellen (22) in Relation zu den Seiten abgewinkelt sind.

5. Bodenlockerungszinke nach einem vorhergehenden Anspruch, wobei die wenigstens zwei Flügellamellen (32) lösbar an dem Träger (34) angebracht sind.

6. Bodenlockerungszinke nach einem vorhergehenden Anspruch, wobei die wenigstens zwei Flügellamellen aus wärmebehandeltem Material sind.

7. Bodenlockerungszinke nach einem vorhergehenden Anspruch, wobei die wenigstens zwei Flügellamellen mit einer abriebfesten Substanz überzogen sind.

8. Bodenlockerungszinke nach einem vorhergehenden Anspruch, wobei die voreilenden Punkte der wenigstens zwei Flügellamellen in Relation zu der Bewegungsrichtung fluchtend ausgerichtet sind.

9. Bodenlockerungszinke nach einem der Ansprüche 1 bis 7, wobei die voreilenden Punkte der wenigstens zwei Flügellamellen in Relation zu der Bewegungsrichtung versetzt sind.

10. Bodenlockerungszinke nach Anspruch 4, wobei die voreilende Kante der inneren Latte eine Linie definiert und die voreilende Kante des einen oder der mehreren äußeren Latten eine Fortsetzung dieser Linie ist.

11. Bodenlockerungszinke nach irgendeinem vorhergehenden Anspruch, ferner umfassend eine pointierte voreilende Spitze mit einer schmalen voreilenden Kante.

12. Bodenlockerungszinke nach einem vorhergehenden Anspruch, ferner umfassend ein Abriebbein (20), das eine schmale voreilende Kante aufweist.

13. Bodenlockerungszinke nach einem vorhergehenden Anspruch, bei der der nacheilende Abschnitt jeder Flügellamelle (32) verdreht und in Relation zu einer von dem Rest der jeweiligen Flügellamelle definierten Ebene nach oben abgewinkelt ist, so dass die äußere hintere Ecke des nacheilenden Abschnitts der jeweiligen abgewinkelten Flügellamelle höher als die innere hintere Ecke von diesem ist.

## Revendications

1. Dent d'ameublissement (10) ayant un corps (12), une pointe de contact avec le sol (18) et au moins une aile (22) s'étendant transversalement par rapport à la pointe, dans laquelle la au moins une aile comprend un support (34) s'étendant à partir de la dent et au moins deux lamelles d'aile (32), espacées l'une de l'autre sur le support, chaque lamelle d'aile comprenant un bord de fuite (42), un côté interne et un côté externe, **caractérisée en ce que** la partie de fuite d'au moins l'une des lamelles d'aile (32) est tordue et coudée vers le haut par rapport à un plan défini par le reste de la lamelle d'aile, de sorte que le coin arrière externe de la partie de fuite de la lamelle d'aile coudée est supérieur à son coin arrière interne.

2. Dent d'ameublissement selon la revendication 1, dans laquelle la dent d'ameublissement (10) comprend en outre au moins une aile (22) de chaque côté de la dent.

3. Dent d'ameublissement selon la revendication 1, dans laquelle le bord d'attaque (38) d'au moins l'une des lamelles d'aile (32) comprend un bord de coupe.

4. Dent d'ameublissement selon la revendication 1 ou la revendication 3, dans laquelle les bords d'attaque (38) des au moins deux lamelles d'aile (22) sont coudés par rapport aux côtés.

5. Dent d'ameublissement selon l'une quelconque des revendications précédentes, dans laquelle les au moins deux lamelles d'aile (32) sont montées de manière détachable sur le support (34).

6. Dent d'ameublissement selon l'une quelconque des revendications précédentes, dans laquelle les au moins deux lamelles d'aile sont réalisées avec un matériau traité thermiquement.

7. Dent d'ameublissement selon l'une quelconque des revendications précédentes, dans laquelle les au moins deux lamelles d'aile sont recouvertes avec une substance résistante à l'usure.

8. Dent d'ameublissement selon l'une quelconque des revendications précédentes, dans laquelle les points d'attaque des au moins deux lamelles d'aile sont alignés par rapport à la direction de déplacement.

9. Dent d'ameublissement selon l'une quelconque des revendications 1 à 7, dans laquelle les points d'attaque des au moins deux lamelles d'aile sont en quinconce par rapport à la direction de déplacement.

10. Dent d'ameublissement selon la revendication 4, dans laquelle le bord d'attaque de la lamelle interne définit une ligne et le bord d'attaque des une ou plusieurs lamelles externes est une continuité de cette ligne.

11. Dent d'ameublissement selon l'une quelconque des revendications précédentes, comprenant en outre une pointe d'attaque pointue avec un bord d'attaque étroit.

12. Dent d'ameublissement selon l'une quelconque des revendications précédentes, comprenant en outre un bord frontal d'usure (20) ayant un bord d'attaque étroit.

13. Dent d'ameublissement selon l'une quelconque des revendications précédentes, dans laquelle la partie de fuite de chaque lamelle d'aile (32) est tordue et coudée vers le haut par rapport à un plan défini par le reste de la lamelle d'aile respective, de sorte que le coin arrière externe de la partie de fuite de la lamelle d'aile coudée respective est supérieur à son coin arrière interne.
